# EUROPÄISCHE PATENTSCHRIFT

(11) **EP 2 186 736 B1**
(45) Veröffentlichungstag und Bekanntmachung des Hinweises auf die Patenterteilung: **25.05.2011**
(21) Anmeldenummer: 09173100.0
(22) Anmeldetag: 15.10.2009
(51) Int. Cl.: B65C 9/40

(54) **Verfahren zur Funktionsüberprüfung einer Überwachungseinrichtung einer automatischen Etikettiermaschine**
Method for testing the functionality of a testing device of an automatic labelling machine
Procédé de contrôle du fonctionnement d'un dispositif de surveillance d'une machine d'étiquetage automatique

(30) Priorität: 31.10.2008 DE 102008054238
(43) Veröffentlichungstag der Anmeldung: 19.05.2010
(73) Patentinhaber: Krones AG, 93073 Neutraubling (DE)
(72) Erfinder: Lindner, Peter, 84085 Langquaid (DE)
(74) Vertreter: Benninger, Johannes

(56) Entgegenhaltungen:
- WO-A1-2010/040512
- DE-A1- 19 646 694
- DE-A1- 19 946 080
- DE-A1-102006 022 492
- DE-C1- 4 302 656

## Beschreibung

Die vorliegende Erfindung betrifft ein Verfahren zur Funktionsüberprüfung einer Überwachungseinrichtung einer automatischen Etikettiermaschine mit den Merkmalen des unabhängigen Anspruchs 1.

Das Aufbringen von Etiketten auf mit Getränken befüllte Getränkebehälter und Flaschen erfolgt üblicherweise in einem kontinuierlichen Prozess mittels automatischer Etikettiermaschinen, die einen Teil einer Rundläufermaschine zur Behälterabfüllung bilden. Unsauber oder schräg aufgebrachte Etiketten können einen Mangel darstellen, der unter ungünstigen Umständen zu einer Abschaltung der Abfüllmaschine führen kann. Um die korrekte Platzierung und Anbringung der Etiketten permanent überprüfen zu können, können der Etikettiermaschine eine Kamera oder ggf. mehrere Kameras mit nachgeschalteter Bildauswertung nachgeordnet sein.

Eine derartige Etikettiermaschine geht aus der DE 199 11 074 B4 hervor. Bei dieser bekannten Vorrichtung werden die ausgewerteten Bilder einer der Etikettierstation nachgeordneten Kamera nicht nur zur Überwachung der richtigen Platzierung der Etiketten genutzt, sondern es werden daraus Korrektursignale zur Ansteuerung einer Korrektureinrichtung für die jeweilige Etikettierstation oder zur Synchronisation eines Greiferzylinders und von Entnahmeelementen gebildet. Dieses bekannte System ermöglicht somit in gewissem Ausmaß eine Korrektur der Platzierung der Etiketten im laufenden Betrieb der Maschine.

Die bekannten Überwachungseinrichtungen können jedoch nur dann mit der gewünschten Zuverlässigkeit arbeiten, wenn sie nicht ihrerseits dejustiert sind. Um die üblicherweise verwendete Kamera in eine korrekte Position zu bringen und diese Position einzumessen bzw. zu initialisieren, können bspw. Testbehälter verwendet werden, die ein geeignetes Testmuster aufweisen, das von der Kamera erkannt und von der nachgeschalteten Auswerteeinheit genutzt werden kann, um die Einstellungen der Kamera zu prüfen.

Ein solches Testbehältnis und eine Testanordnung für eine Kontrollvorrichtung für Behälter geht aus der DE 10 2006 022 492 A1 hervor. Das Testbehältnis weist mehrere gleichmäßige horizontale Markierungsringe an der Behälteroberfläche auf, die von vertikalen Markierungen durchzogen sind, so dass sich eine netzartige Markierungsstruktur ergibt. Mit Hilfe dieser Markierungsstruktur sowie durch eine Anordnung zur exakten Höhenjustierung des Testbehälters kann die Kamera kalibriert und eingestellt werden.

Probleme können sich im laufenden Betrieb einer Etikettiermaschine immer dann ergeben, wenn eine unerkannte Fehlstellung der Kamera entweder dazu führt, dass fehlerhaft aufgebrachte Etiketten nicht erkannt werden oder dass sie zu einer unzureichenden oder sogar fehlerhaften Korrektur der Einstelldaten für die Aufbringung der Etiketten führen. Die Tatsache, dass eine erneute Justage und nachfolgende Neukalibrierung der Kamera erforderlich sein könnte, lässt sich oftmals erst aus einer genauen Vermessung der mit Etiketten versehenen Behälter ableiten. In diesem Fall kann jedoch bereits eine Vielzahl von fehlerhaft mit Etiketten beklebten Behältern als einwandfrei einer Weiterverarbeitung und/oder Verpackung zugeführt worden sein.

Ein Ziel der vorliegenden Erfindung besteht darin, ein Verfahren zur Verfügung zu stellen, mit dessen Hilfe die Erfassungsqualität und/oder Genauigkeit einer Überwachungseinrichtung für eine automatische Etikettiermaschine beurteilt und überprüft werden kann.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Zur Etikettierung von Behältern können diese bei einer häufig verwendeten Ausführungsvariante einer Etikettiereinrichtung über eine Einteilschnecke regelmäßig voneinander beabstandet einem Einlaufstern der Etikettiermaschine übergeben werden. Von diesem Einlaufstern wird jeder einzelne Behälter auf einen separaten Zentrierteller geschoben, der sich auf einem drehenden Behältertisch befindet. Dieser Einlaufstern ist über ein Getriebe mit dem Behältertisch verbunden. Der Behältertisch, der über ein Hauptgetriebe in Rotation gebracht wird, befördert die Behälter durch eine Behandlungsstrecke, wie bspw. der Etikettierung, Anbürstung, Etikettenkontrolle usw. Selbstverständlich kann das erfindungsgemäße Verfahren auch bei anderen Varianten von Förder- und/oder Etikettiereinrichtungen zum Einsatz kommen.

Um präzise etikettieren zu können, muss der Behälter während des Durchlaufens der Behandlungsstrecke normalerweise fest fixiert und zentriert werden. Dazu wird jeder Behälter zwischen dem Zentrierteller und einer sich vom Maschinenoberteil absenkenden Zentrierglocke fest eingespannt. Um eine genaue Position der Behälter bestimmen zu können, kann es sinnvoll sein, die Förderaggregate und Einrichtungen, wie Sensoren, Überwachungseinrichtungen, Etikettieraggregate und vieles mehr über einen Maschinendrehgeber o. dgl. zu überwachen. Dieser Maschinendrehgeber ist so mit der Etikettiermaschine gekoppelt, dass diese jeden Behälter mit der gewünschten Präzision meinem Etikett versehen kann. Zudem kann ein solcher Drehgeber dazu dienen, die aktuelle Position jedes einzelnen Drehtellers und damit jedes einzelnen Behälters jederzeit bestimmen zu können.

Ein Einsatz von rechnergesteuerten Servomotoren veranlasst den Zentrierteller zu einer definierten Drehung, die für die Etikettierung und Anbürstung erforderlich sein kann. Diese Servomotoren können die einzelnen Zentrierteller separat antreiben und ermöglichen somit eine exakte Anpassung der Etiketten.

Soll die exakte Positionierung der auf den Behältern angeordneten Etiketten im weiteren Transportweg der Behälter überprüft werden, können bspw. Kameras an geeigneter Stelle zum Einsatz kommen, die mit einer Bildauswertung gekoppelt sind. Als Kameraposition kann sich bspw. eine Stelle in Nähe eines Auslaufsterns einer Rundläufermaschine eignen. Eine solche Kamera dient im vorliegenden Zusammenhang als Etikettenkontrolle und damit als Kontrolle der einwandfreien Funktion der Etikettieraggregate und deren Zusammenwirken mit den Fördereinrichtungen. Die am Auslaufstern integrierte Etikettenkontrolle, die als Überwachungseinrichtung dient, ermöglicht die Erkennung fehlerhaft oder nicht etikettierter Behälter, die in den Auslauf zur Weiterverarbeitung kommen. Nach einer Erkennung können diese fehlerhaften Behälter mittels eines geeigneten Signals ausgesondert und bspw. über ein Ausscheideband ausgeschleust werden. Die Kamera bildet somit eine optische Erfassungseinrichtung der Überwachungseinrichtung zur Abtastung der Behälter. Die mittels einer der Kamera nachgeordneten Bildauswerteschaltung erzeugten Signale werden derart an den Auslaufstern übertragen, dass entweder eine Ausschleusung eines bestimmten Behälters oder dessen Weiterleitung an nachfolgende Einrichtungen der Etikettiermaschine erfolgen kann. Hierfür umfasst die Erfindung zudem ein Programm zur Erkennung und Verarbeitung besonders gekennzeichneter Messbehälter, welche der Etikettiermaschine im laufenden Betrieb eingesetzt werden können, um gezielt diesen Messbehälter mittels der Erfassungseinrichtung bzw. der Kamera abzutasten und anhand des gewonnenen Abbildungssignals deren Justierung überprüfen und beurteilen zu können. Es wird mittels des Messbehälters kein Fehler während des Etikettiervorgangs produziert, sondern die Etikettierung wird beim Passieren des Messbehälters ausgesetzt bzw. unterbrochen, um dessen Oberfläche und/oder Struktur ohne störende Einflüsse abtasten zu können. Somit wird ein Verfahren zur Funktionsüberprüfung der Überwachungseinrichtung der automatischen Etikettiermaschine bereitgestellt.

Die Funktionen der Überwachungseinrichtung sollten auf die beschriebene Weise regelmäßig überprüft werden, damit mögliche Fehlstellungen der Überwachungseinrichtung möglichst schnell erkannt und behoben werden können.

Die optische Erfassungseinrichtung wird durch wenigstens eine Kamera mit nachgeschalteter Bildauswertung gebildet, jedoch können auch mehrere solcher Kameras an verschiedenen Maschinenpositionen vorgesehen sein. Die wenigstens eine optische Erfassungseinrichtung bzw. Kamera tastet jeden Behälter ab und ermittelt mit Hilfe der nachgeschalteten Bildauswertung alle möglichen Fehler der Abbildung. Die Abtastung und Erfassung des Messbehälters ermöglicht dann mit Hilfe der vorher eingestellten Behälterkoordinaten die Zuordnung richtiger Bildkoordinaten, so dass bspw. schief stehende oder zu hoch oder zu tief angeordnete Markierungen des Messbehälters in der Abbildung der Kamera identifiziert werden können. Um regelmäßig das Testprogramm in der Etikettiermaschine durchführen zu können, sollten ein oder auch mehrere besonderes gekennzeichnete Messbehälter in die laufende Maschine eingeschleust werden. Diese Messbehälter sind mit definierten, optisch eindeutig erkennbaren und zuordenbaren Merkmalen versehen, um eine eindeutige Erkennung einer fehlerhaften Abbildung der optischen Erfassungseinrichtung bzw. Kamera zu ermöglichen.

Der Messbehälter weist vorzugsweise eine geeignete Kennzeichnung auf, die einer Wechselwirkung mit einem Sensor der Etikettiermaschine dient, so dass ein eingeschleuster Messbehälter eindeutig als solcher erkannt werden kann. Diese Merkmale an den Messbehältern könnten eine optische, magnetische, induktive und/oder kombinierte Kennzeichnung sein, auch wäre eine RFID-Kennzeichnung denkbar. Diese Kennzeichnungen ermöglichen die Wechselwirkung mit einem korrespondierenden Sensor, der bspw. am Einlaufstern der Etikettiermaschine angebracht sein kann, so dass im Zusammenhang mit dem Signal des Maschinendrehgebers jederzeit die aktuelle Position des Messbehälters verfolgt und entsprechende Maschinenbefehle ausgelöst werden können.

Die optischen Markierungen des Messbehälters dienen ausschließlich der Wechselwirkung mit der optischen Erfassungseinrichtung bzw. der Kamera. So können die Markierungen bspw. durch eine Vielzahl von horizontalen Ringen und senkrechten Linien skaliert werden. Dies kann bspw. mit schwarzen Linien und/oder Gravuren erreicht werden. Die Markierungslinien umgeben den Messbehälter vollständig und sind wahlweise in gleichen oder unterschiedlichen Abständen angebracht. Diese Abstände sind vorzugsweise mit der Bildauswerteschaltung der Überwachungseinrichtung abgestimmt, damit die erfassten Abbildungen des Messbehälters eindeutig bestimmten Kamerafehlstellungen zugeordnet werden können. Eine weitere mögliche Ausgestaltung der Messbehälter könnte darin bestehen, diese durch eine unterschiedliche Farbgestaltung von den anderen Behältern zu unterscheiden. Weitere Varianten wären eine Einbringung von Mustern wie bspw. ein schwarzes Gittermuster oder ein eingefärbtes Schachbrettmuster.

Die Erkennung und Positionsbestimmung des Messbehälters ist somit von großer Bedeutung, da der Etikettiervorgang zumindest für diesen Messbehälter an der Etikettierstation ausgesetzt werden soll und die Überwachungseinrichtung jeden erkannten Messbehälter mit dessen Bildkoordinaten überprüfen soll. Zudem soll damit ermöglicht werden, den Messbehälter mit Hilfe der zuvor bestimmten Position nach seinem Durchlauf an vorgegebener Stelle auszuschleusen. Die Position des Messbehälters kann während seines Durchlaufs durch die Etikettiermaschine mittels wenigstens eines Sensors am Einlaufstern der Etikettiermaschine bestimmt werden. Zudem wird die Position durch die Abstimmung des Zentriertellers mit dem Maschinendrehgeber der Maschine bestimmt, wobei zudem andere Geräte dementsprechend gesteuert werden können.

Auch kann mittels eines zusätzlichen Sensors an einer der Ausschleusung nachgeordneten Position das Passieren des Messbehälters überwacht werden. Wird in Folge der Überwachung der Messbehälter erfasst, kann anschließend ein Fehlersignal erzeugt werden, welches bspw. zu einer Abschaltung der Maschine oder zu einem erneuten Ausschleusvorgang an einer weiteren Ausschleuseposition führen kann. Sollte keine solche weitere Ausschleuseposition vorhanden sein, kann bei Erfassung des Messbehälters durch den zusätzlichen Sensor vorzugsweise ein Stoppsignal für die Etikettiermaschine und/oder dieser vor- und/oder nachgeordneten Fördereinrichtungen ausgelöst werden.

Erwähnenswert ist, dass die Zuführung, Erfassung und Ausschleusung des Messbehälters im laufenden, ununterbrochenen Betrieb der Etikettiermaschine erfolgt. Die Etikettenzuführung und -anbringung ist für jeden einzelnen Behälter separat steuerbar. Nach Erkennung des Messbehälters bei dessen Passierung wird die Steuerung der Etikettenzuführung und -anbringung temporär deaktiviert; im Anschluss wird bei einem nachfolgenden Behälter die Steuerung wieder aktiviert. Diese Deaktivierung und Aktivierung der Etikettenzuführung und -anbringung kann auf Grundlage der erkannten und beim Durchlauf der Etikettiermaschine verfolgten Behälterposition des Messbehälters erfolgen.

Eine weitere mögliche Ausführungsvariante des erfindungsgemäßen Verfahrens kann vorsehen, dass die Justierung und/oder Fokussierung der wenigstens einen optischen Erfassungseinrichtung bzw. Kamera auf Grundlage der gewonnenen Bilder des Messbehälters im laufenden Betrieb der Etikettiermaschine korrigiert werden kann. Je nach Verstellmöglichkeiten der Kamera kann auf diese Weise ggf. auf eine Abschaltung der gesamten Maschine verzichtet werden, sollte eine fehlerhafte Kameraposition und/oder - justierung erkannt worden sein.

Der Messbehälter kann der Etikettiermaschine zeitabhängig oder in Abhängigkeit der Behälteranzahl zur Erfassung und/oder Überprüfung der Funktion und Einstellung der wenigstens einen optischen Erfassungseinrichtung zugeführt werden. D.h., der Messbehälter kann bspw. nach einer festgelegten Durchlaufzeit oder nach einer festgelegten Anzahl bereits durch die Maschine passierter Behälter wiederholt zugeführt werden.

Die am 15. April 2010 veröffentlichte WO2010/040512 beansprucht die Priorität vom 07.10.2008 und offenbart ein Verfahren zur Funktionsüberprüfung einer Überwachungseinrichtung, von dem sich der Gegenstand des Anspruchs 1 dadurch unterscheidet, dass die wenigstens eine optische Erfassungseinrichtung durch eine Kamera mit nachgeschalteter Bildauswertung gebildet ist.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1: zeigt einen schematischen Aufbau einer Ausführungsvariante einer Etikettiermaschine.
- Fig. 2: zeigt eine vereinfachte Ausführungsform eines Behältertisches einer Rundläufermaschine zur Etikettierung von Behältern.
- Fig. 3: zeigt eine mögliche Ausführungsform eines gekennzeichneten und mit optisch erkennbaren Markierungen versehen Messbehälters.

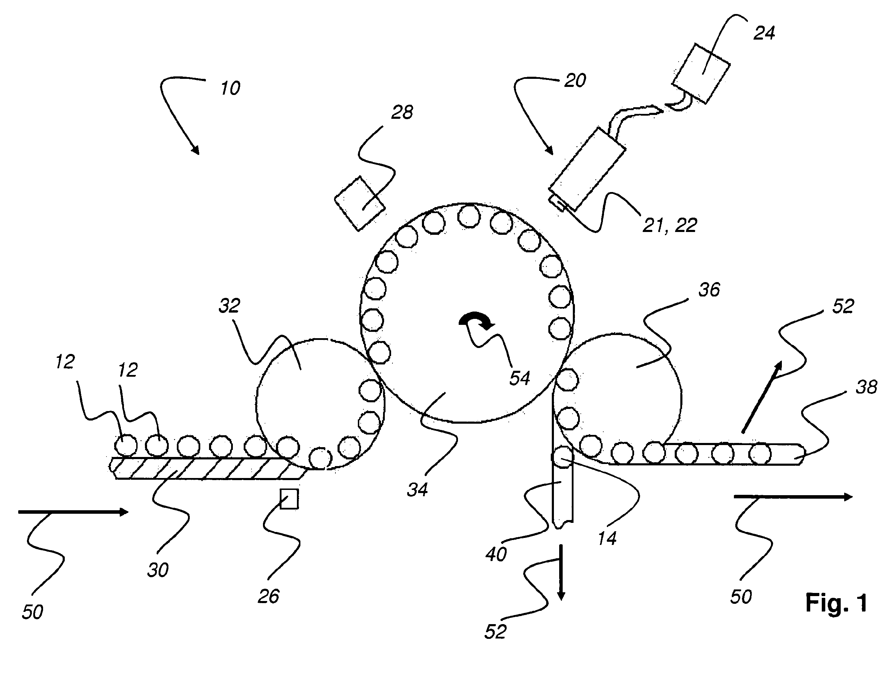

Die schematische Darstellung der Fig. 1 zeigt einen typischen Aufbau einer Etikettiermaschine 10 mit einem Einlaufstern 32 und einem Auslaufstern 36 sowie einem Behältertisch 34. Die rotierende Einteilschnecke 30 bringt den, auf einem Transportband (nicht dargestellt) ankommenden Behälterstrom 12 in Transportrichtung 50 lückenlos auf den erforderlichen Abstand, um eine störungsfreie Übergabe in eine behältergerechte Aussparung des Einlaufsterns 32 zu gewährleisten.

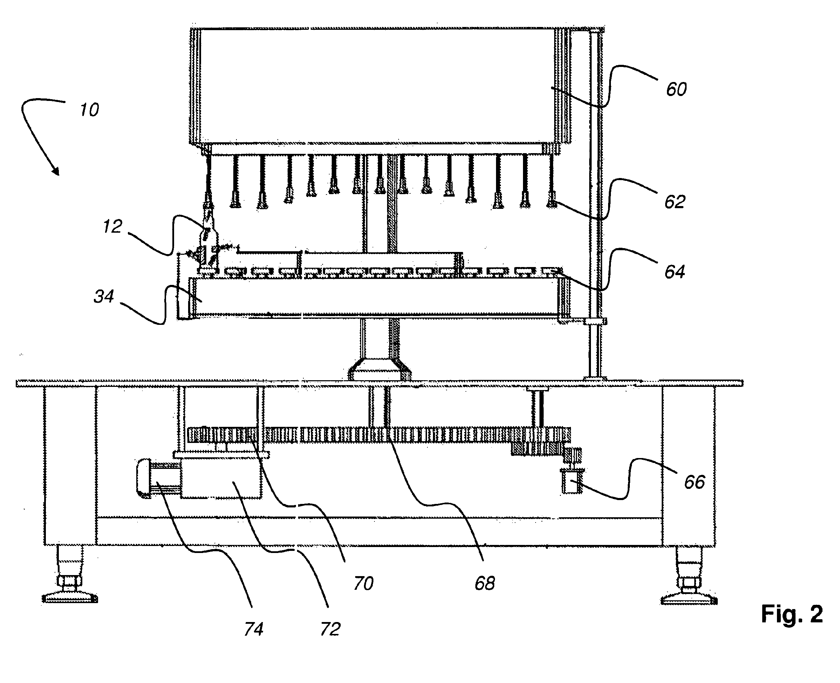

Der Einlaufstern 32 übergibt die Behälter 12 an die Zentrierteller 64, die am Behältertisch 34 montiert sind (vgl. Fig. 2). Der Behältertisch 34 wird im Uhrzeigersinn 54 in Rotation gebracht. Die auf den Zentriertellern 64 stehenden Behälter 12 werden an mindestens einem Etikettieraggregat 28 vorbeibewegt und etikettiert. Die ebenso auf den Zentriertellern 64 stehenden gekennzeichneten Messbehälter 14 (wie nachfolgend näher erläutert) werden als solche erkannt und am Etikettieraggregat 28 nicht etikettiert. Die nachstehende Überwachungseinrichtung 20 ermittelt mit einer optischen Erfassungseinrichtung 21 in Gestalt einer Kamera 22 die richtige Anbringung oder aber auch das mögliche Fehlen von Etiketten und überträgt die Informationen an eine nachgeordnete Bildauswertung 24.

Diese Bildauswertung 24 dient bei der Erfassung des Messbehälters 14 dazu, um anhand einer Referenzmessung das aktuelle Markierungsbild des Messbehälters 14 mit einem abgelegten Referenzbild zu vergleichen. Mit diesem Vergleich kann der gesamte Zustand der Überwachungseinrichtung 20 ermittelt und Unstimmigkeiten, bspw. eine mögliche Fehlstellung der Kamera 22, zumindest erkannt werden. Je nach Maschinenausstattung kann eine solche erkannte Kamerafehlstellung ggf. durch eine automatische Nachjustierung ausgeglichen werden. Alternativ kann die Kamera 22 manuell justiert werden.

Um dies realisieren zu können, kann einer der Behälter 12 durch einen besonders gekennzeichneten Messbehälter 14 ersetzt werden, der die Maschine 10 in nachfolgend beschriebener Weise durchläuft. Für die Justierung der Kamera 22 ist vor allem der Durchlauf eines solchen gekennzeichneten Messbehälters 14 relevant.

Kurz vor der Übergabe der Behälter 12 an den Einlaufstern 32 ist ein Sensor 26 angebracht, der dazu dient, einen gekennzeichneten Messbehälter 14 zu erkennen, der anstelle eines normalen Behälters 12 die Maschine 10 durchlaufen soll. Mit Hilfe des Sensors 26 kann die Position und Übergabe des Messbehälters 14 während seines Durchlaufs durch die Maschine 10 genau bestimmt werden. Der Sensor 26 steht mit dem mindestens einen nachgeordneten Etikettieraggregat 28 und der Überwachungseinrichtung 20 in Wirkverbindung. An diese Vorrichtungen werden die Positionen der Behälter zudem von einem Maschinendrehgeber (vgl. Fig. 2) übermittelt.

Die Positionskoordinaten des Messbehälters 14 werden an das Etikettieraggregat 28 übertragen, damit in diesem Fall das Etikettieren des Messbehälters 14 verhindert werden kann. Die Überwachungseinrichtung 20 kann diesen Messbehälter 14 zum einen durch das Fehlen des Etikette und zum anderen durch die Abtastung der Flaschenkontur bzw. deren Oberflächenmarkierungen 16 erkennen.

Im laufenden Betrieb werden die Behälter 12 einzeln an den Auslaufstern 36 übergeben und die Behälter 12 werden in Transportrichtung 50 weiter transportiert. Der Messbehälter 14 wird wegen seiner Erkennung zwar auch dem Auslaufstern 36 übergeben, aber anschließend auf ein Ausscheideband 40 ausgeschleust. Dieses Ausscheideband 40 kann am Auslaufstern 36 an einer vorgegebenen Stelle oder an einer dieser nachgeordneten Fördereinrichtung angebracht sein.

Auf dieses Ausscheideband 40 werden normalerweise nur Behälter 12 gebracht, welche mit einem Fehler behaftet sind. Im vorliegenden Zusammenhang kann das Ausscheideband 40 dazu genutzt werden, markierte Messbehälter 14 aus dem weiteren Förderprozess auszuschleusen. Die ausgeschiedenen Behälter 12 bzw. Messbehälter 14 werden entlang einem Ausscheideweg 52 befördert und an einem Sammelpunkt (nicht dargestellt) angestaut oder diese werden in einem aufgestellten Behältnis abgegeben.

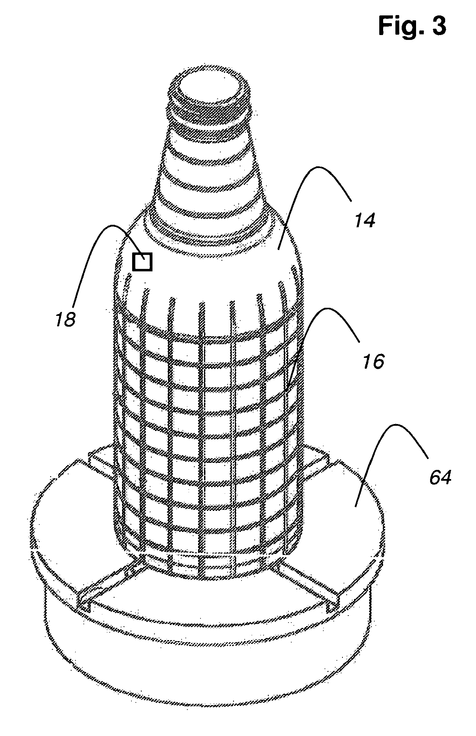

Die Fig. 2 zeigt eine vereinfachte Ausführungsform eines Behältertisches 34 einer Rundläufermaschine. Auf dem Behältertisch 34 sind die Zentrierteller 64 angeordnet, auf denen die Behälter 12 sowie auch gekennzeichnete Messbehälter 14 (vgl. Fig. 3) zu einzelnen Behandlungsstationen, wie Etikettieraggregat, Etikettenkontrolle usw. (nicht dargestellt) weiter geführt werden können. Die Behälter 12, 14, die vom Einlaufstern 32 auf den Behältertisch 34 übergeben werden, werden mittels einer Zentrierglocke 62 und dem Zentrierteller 64 fest fixiert und eingespannt. Die Zentrierglocke 62 senkt sich vom Maschinenoberteil 60 ab und umfasst die Behälter 12, 14 am Flaschenhals.

Ein Maschinendrehgeber 66 steht mit dem Behältertisch 34 durch ein Hauptzahnrad 68 im Verzahnungseingriff. Dieses Hauptzahnrad 68 wird durch ein Hauptantriebszahnrad 70 angetrieben, welches wiederum über ein Getriebe 72 von einem Hauptantriebsmotor 74 angetrieben wird. Mit Hilfe des Maschinendrehgebers 66 kann die Position eines jeden Behälters 12, 14 auf der Maschine 10 mittels einer geeigneten Überwachungsschaltung bestimmt und ggf. weiteren Steuerungsschaltungen als Positionssignale zur Verfügung gestellt werden.

Eine mögliche Ausführungsform eines gekennzeichneten Messbehälters 14 wird in Fig. 3 gezeigt. Diese Ausführungsform zeigt eine mögliche Anbringung von Markierungen 16. Bspw. können horizontale Markierungsringe und senkrecht Markierungslinien in eine Außenmantelfläche des gekennzeichneten Messbehälters 14 eingebracht sein. Diese Markierungen 16 können wahlweise in regelmäßigen oder in unregelmäßigen Abständen angetragen sein.

Darüber hinaus weist der Messbehälter 14 eine eindeutig identifizierbare Kennzeichnung 18 zur Wechselwirkung zumindest mit dem Sensor 26 (vgl. Fig. 1) auf. Diese Kennzeichnung 18 kann in vorteilhafter Weise durch eine RFID-Kennzeichnung o. dgl. gebildet sein. Auch sind optische, magnetische, induktive und/oder kombinierte Kennzeichnungen 18 möglich, die jeweils mit dem entsprechend konfigurierten korrespondierenden Sensor 26 der Etikettiermaschine 10 in Wechselwirkung stehen. Auf diese Weise kann ein in die Maschine 10 eingeschleuster Messbehälter 14 eindeutig als solcher identifiziert und seine Position mit zusätzlicher Hilfe des Maschinendrehgebers 66 (vgl. Fig. 2) verfolgt werden. Sobald der Messbehälter 14 das Etikettieraggregat 28 passiert, wird dieses kurzzeitig deaktiviert, damit der Messbehälter 14 kein Etikett erhält und seine Außenkontur und Markierungen 16 anschließend von der Kamera 22 erfasst werden können.

## Patentansprüche

1. Verfahren zur Funktionsüberprüfung einer Überwachungseinrichtung (20) einer automatischen Etikettiermaschine (10) für Behälter (12), bei dem dieser ein besonders **gekennzeichnet**er Messbehälter (14) zugeführt wird, bei dessen Erkennung ein Etikettierungsvorgang zumindest für diesen Messbehälter (14) ausgesetzt und der mit Markierungen (16) versehene Messbehälter (14) mittels wenigstens einer optischen Erfassungseinrichtung (21) der Überwachungseinrichtung (20) abgetastet wird, welche durch eine Kamera (22) mit nachgeschalteter Bildauswertung (24) gebildet ist.

2. Verfahren nach Anspruch 1, bei dem der Messbehälter (14) nach Passieren der optischen Erfassungseinrichtung (21) an vorgegebener Stelle (40) aus der Etikettiermaschine (10) oder einer dieser nachgeordneten Fördereinrichtung ausgeschleust wird.

3. Verfahren nach Anspruch 1, bei dem mehrere Kameras zur Erfassung der etikettierten Behälter (12) an verschiedenen Maschinenpositionen vorgesehen sind.

4. Verfahren nach einem der Ansprüche 1 bis 3, bei dem der Messbehälter (14) eine optische, magnetische, induktive und/oder kombinierte Kennzeichnung (18) zur Wechselwirkung mit einem korrespondierenden Sensor (26) der Etikettiermaschine (10) zu dessen Erkennung aufweist.

5. Verfahren nach einem der Ansprüche 1 bis 3, bei dem der Messbehälter (14) eine RFID-Kennzeichnung (18) zur Wechselwirkung mit einem korrespondierenden Sensor (26) der Etikettiermaschine (10) zu dessen Erkennung aufweist.

6. Verfahren nach einem der Ansprüche 4 bis 5, bei dem bei Erkennung des Messbehälters (14) durch den wenigstens einen Sensor (26) der Etikettiermaschine (10) die Position des Messbehälters während seines Durchlaufs durch die Etikettiermaschine (10) bestimmt und erkannt wird.

7. Verfahren nach Anspruch 6, bei dem die Ausschleusung des Messbehälters (14) an der passenden Stelle (40) der Etikettiermaschine (10) oder der dieser nachgeordneten Fördereinrichtung auf Grundlage der Positionsbestimmung des Messbehälters (14) bei dessen Erfassung durch den wenigstens einen Sensor (26) erfolgt.

8. Verfahren nach Anspruch 6 oder 7, bei dem die Ausschleusung des Messbehälters (14) an der passenden Stelle der Etikettiermaschine (10) oder der dieser nachgeordneten Fördereinrichtung auf Grundlage der von der optischen Erfassungseinrichtung (21) erkannten Position des Messbehälters (14) bei dessen Abtastung erfolgt.

9. Verfahren nach einem der Ansprüche 6 bis 8, bei dem mittels eines zusätzlichen Sensors (26) an einer der Ausschleusung nachgeordneten Position das Passieren des Messbehälters (14) überwacht und bei Erfassung des Messbehälters (14) ein Fehlersignal erzeugt wird.

10. Verfahren nach Anspruch 9, bei dem bei Erfassung des Messbehälters (14) durch den zusätzlichen Sensor (26) ein Stoppsignal für die Etikettiermaschine (10) und/oder dieser vor- und/oder nachgeordneten Fördereinrichtungen ausgelöst wird.

11. Verfahren nach einem der Ansprüche 1 bis 10, bei dem die Zuführung, Erfassung und Ausschleusung des Messbehälters (14) im laufenden, ununterbrochenen Betrieb der Etikettiermaschine (10) erfolgt.

12. Verfahren nach einem der Ansprüche 1 bis 11, bei dem die Etikettenzuführung und -anbringung (28) für jeden einzelnen Behälter (12) separat steuerbar ist und nach Erkennung des Messbehälters (14) bei dessen Passieren temporär deaktiviert und bei einem nachfolgenden Behälter (12) wieder aktiviert wird.

13. Verfahren nach Anspruch 12, bei dem die Deaktivierung und Aktivierung der Etikettenzuführung und -anbringung (28) auf Grundlage der erkannten und beim Durchlauf der Etikettiermaschine (10) verfolgten Behälterposition des Messbehälters (14) erfolgt.

14. Verfahren nach einem der Ansprüche 1 bis 13, bei dem die Justierung und/oder Fokussierung der wenigstens einen optischen Erfassungseinrichtung (21) bzw. Kamera (22) auf Grundlage der gewonnenen Bilder des Messbehälters (14) im laufenden Betrieb der Etikettiermaschine (10) korrigiert wird.

15. Verfahren nach einem der Ansprüche 1 bis 14, bei dem der Messbehälter (14) der Etikettiermaschine (10) in unregelmäßigen oder regelmäßigen Zeitabständen zur Erfassung und/oder Überprüfung der Funktion und Einstellung der wenigstens einen optischen Erfassungseinrichtung (21) zugeführt wird.

## Claims

1. Method for testing the functionality of a testing device (20) of an automatic labelling machine (10) for the labelling of containers (12) whereby a specially marked measuring container (14) is fed into the labelling machine (10), whereby the labelling process is interrupted for at least this measuring container (14) when the measuring container (14) is recognized by the testing device (20) and whereby the measuring container (14) comprises recognition marks (16) that are scanned by an optical detection device (21), which is a camera (22) with a subsequent image evaluation (24).

2. Method according to claim 1, whereby the measuring container (14) is ejected from the labelling machine (10) or a subsequent conveying device after passing the optical detection device (21) at a specified position (40).

3. Method according to claim 1, whereby a plurality of cameras is used at different positions in the machine to register the labelled containers (12).

4. Method according to one of the claims 1 to 3, whereby the measuring container (14) comprises an optical, magnetical or inductive identification (18) and / or a combination thereof for the interaction with and the recognition by a corresponding sensor (26) of the labelling machine (10).

5. Method according to one of the claims 1 to 3, whereby a measuring container (14) comprises a RFID- identification (18) for the interaction with and the recognition by a corresponding sensor (26) of the labelling machine (10).

6. Method according to one of the claims 4 to 5, whereby the position of the measuring container (14) during its movement through the labelling machine (10) is determined and recognized by the at least one sensor (26) of the labelling machine (10).

7. Method according to claim 6, whereby the positioning of the measuring container (14) determined by the recognition with the at least one sensor (26) is used to determine the suitable site to eject the measuring container (14) from the labelling machine (10).

8. Method according to one of the claims 6 to 7, whereby the position of the measuring container (14) is determined by the optical detection device (21) by scanning the measuring container (14) and whereby the position of the measuring container (14) is used to determine the suitable site to eject the measuring container (14) from the labelling machine (10) or from the subsequent conveying device.

9. Method according to one of the claims 6 to 8, whereby an additional sensor (26) is used to supervise the passage of the measuring container (14) at a position subsequent to the ejection site and whereby an error signal is produced if a measuring container (14) passes this position.

10. Method according to claim 9, whereby a stop signal for the labelling machine (10) or for the subsequent conveying device is produced when the additional sensor (26) recognizes a passing measuring container (14).

11. Method according to one of the claims 1 to 10, whereby the delivery, recognition and ejection of the measuring container (14) is done during the continuous, non-stop process of the labelling machine (10).

12. Method according to one of the claims 1 to 11, whereby the delivery and mounting of the labels (28) can be controlled for each container (12) separately, whereby the delivery and mounting of the labels (28) can be deactivated temporarily for a passing measuring container (14) after recognition of this measuring container (14) and whereby the delivery and mounting of the labels (28) can then be reactivated for a container (12) following the measuring container (14).

13. Method according to claim 12, whereby the deactivation and activation of the delivery and mounting of the labels (28) is done on the basis of the position of the measuring container (14) recognized and followed during the movement of the measuring container (14) through the labelling machine (10).

14. Method according to one of the claims 1 to 13, whereby the adjustment and / or the focusing of the at least one optical recognition device (21) or camera (22) is corrected on the basis of the images achieved from the measuring container (14) during the continuous process of the labelling machine (10).

15. Method according to one of the claims 1 to 14, whereby the measuring container (14) is passed through the labelling machine (10) in irregularly or regularly spaced time intervalls to recognize and / or inspect the function and adjustment of the at least one optical recognition device (21).

## Revendications

1. Procédé de vérification de fonctionnement d'un équipement de surveillance (20) d'une étiqueteuse automatique (10) pour récipients (12), dans lequel un récipient d'étalonnage (14) identifié spécifiquement est amené à ladite machine, lors de la reconnaissance duquel au moins une opération d'étiquetage est suspendue au moins pour ce récipient d'étalonnage (14) et le récipient d'étalonnage (14) muni de repères (16) est balayé au moyen d'au moins un équipement de détection optique (21) de l'équipement de surveillance (20) qui est formé par une caméra (22) avec analyse d'image (24) placée en aval.

2. Procédé selon la revendication 1, dans lequel le récipient d'étalonnage (14), après son passage devant l'équipement de détection optique (21), est évacué de l'étiqueteuse (10) ou d'un convoyeur placé en aval de celle-ci, à un endroit spécifié (40).

3. Procédé selon la revendication 1, dans lequel plusieurs caméras sont prévues pour détecter les récipients étiquetés (12) dans différentes positions sur la machine.

4. Procédé selon l'une quelconque des revendications 1 à 3, dans lequel le récipient d'étalonnage (14) présente une identification (18) optique, magnétique, inductive et/ou combinée pour une interaction avec un capteur (26) correspondant de l'étiqueteuse (10) en vue de la reconnaissance de celui-ci.

5. Procédé selon l'une quelconque des revendications 1 à 3, dans lequel le récipient d'étalonnage (14) présente une identification RFID (18) pour une interaction avec un capteur (26) correspondant de l'étiqueteuse (10) en vue de la reconnaissance de celui-ci.

6. Procédé selon l'une quelconque des revendications 4 à 5, dans lequel, en cas de reconnaissance du récipient d'étalonnage (14) par ledit au moins un capteur (26) de l'étiqueteuse (10), la position du récipient d'étalonnage pendant son passage par l'étiqueteuse (10) est déterminée et reconnue.

7. Procédé selon la revendication 6, dans lequel l'évacuation du récipient d'étalonnage (14) à l'endroit approprié (40) de l'étiqueteuse (10) ou du convoyeur placé en aval de celle-ci, est effectuée sur la base de la détermination de position du récipient d'étalonnage (14) lors de sa reconnaissance par ledit au moins un capteur (26).

8. Procédé selon la revendication 6 ou 7, dans lequel l'évacuation du récipient d'étalonnage (14) à l'endroit approprié de l'étiqueteuse (10) ou du convoyeur placé en aval de celle-ci est effectuée sur la base de la position du récipient d'étalonnage (14) reconnue par l'équipement de détection optique (21) lors de son balayage.

9. Procédé selon l'une quelconque des revendications 6 à 8, dans lequel, au moyen d'un capteur (26) supplémentaire, à une position en aval de l'évacuation, le passage du récipient d'étalonnage (14) est surveillé et un signal d'erreur est généré lorsque le récipient d'étalonnage (14) est détecté.

10. Procédé selon la revendication 9, dans lequel, en cas de détection du récipient d'étalonnage (14) par le capteur supplémentaire (26), un signal d'arrêt est déclenché pour l'étiqueteuse (10) et/ou des convoyeurs placés en amont et/ou en aval de celle-ci.

11. Procédé selon l'une quelconque des revendications 1 à 10, dans lequel l'alimentation, la détection et l'évacuation du récipient d'étalonnage (14) sont effectuées en cours de fonctionnement continu de l'étiqueteuse (10).

12. Procédé selon l'une quelconque des revendications 1 à 11, dans lequel l'alimentation et l'application d'étiquettes (28) peuvent être commandées séparément pour chaque récipient individuel (12), et après reconnaissance du récipient d'étalonnage (14) lors de son passage, elles sont désactivées temporairement et réactivées pour un récipient (12) consécutif.

13. Procédé selon la revendication 12, dans lequel la désactivation et l'activation de l'alimentation et de l'application des étiquettes (28) sont effectuées sur la base de la position de récipient du récipient d'étalonnage (14), reconnue et suivie lors de son passage par l'étiqueteuse (10).

14. Procédé selon l'une quelconque des revendications 1 à 13, dans lequel l'alignement et/ou la mise au point dudit au moins un équipement de détection optique (21) ou de la caméra (22) sont corrigés sur la base des images acquises du récipient d'étalonnage (14) en cours de fonctionnement continu de l'étiqueteuse (10).

15. Procédé selon l'une quelconque des revendications 1 à 14, dans lequel le récipient d'étalonnage (14) de l'étiqueteuse (10) est amené à intervalles irréguliers ou réguliers pour la détection et/ou la vérification du fonctionnement et le réglage dudit au moins un équipement de détection optique (21).
